Europäisches Patentamt

European Patent Office

Office européen des brevets

(11) Veröffentlichungsnummer: **0 402 696**
**A1**

(12) **EUROPÄISCHE PATENTANMELDUNG**

(21) Anmeldenummer: **90110180.8**

(22) Anmeldetag: **29.05.90**

(51) Int. Cl.5: **G01N 21/31, G01N 21/74**

(30) Priorität: **10.06.89 DE 3919042**

(43) Veröffentlichungstag der Anmeldung:
**19.12.90 Patentblatt 90/51**

(84) Benannte Vertragsstaaten:
**DE GB IT**

(71) Anmelder: **BODENSEEWERK PERKIN-ELMER GMBH**
**Alte Nussdorfer Strasse 15**
**D-7770 Uberlingen/Bodensee(DE)**

(72) Erfinder: **Huber, Bernhard**
**Hildegardring 42**
**D-7770 Uberlingen(DE)**

(74) Vertreter: **Weisse, Jürgen, Dipl.-Phys. et al**
**Bökenbusch 41 Postfach 11 03 86**
**D-5620 Velbert 11-Langenberg(DE)**

(54) Verfahren und Vorrichtung zur Analyse von festen Substanzen auf Quecksilber.

(57) Zur Analyse von festen Substanzen auf Quecksilber durch Messung der Atomabsorption wird die Substanz zum Austreiben des Quecksilbers erhitzt. Der entstehende Quecksilberdampf wird mit einem Trägergasstrom über einen Körper (42) großer Oberfläche aus einem amalgambildenden Material geleitet, so daß der Quecksilberdampf an der Oberfläche dieses Körpers (42) als Amalgam gebunden und angereichert wird. Anschließend wird der Körper zum Wiederfreisetzen des als Amalgam angereicherten Quecksilbers erhitzt und der so freigesetzte Quecksilberdampf durch einen Trägergasstrom in eine Meßküvette (46) eines Atomabsorptions-Photo-meters transportiert. Die zu analysierende feste Substanz (12) wird dabei in ein Gefäß (10) mit einem Verschluß (14) eingeschlossen, der während des Er-hitzens der festen Substanz (12) zerstört wird. Zu diesem Zweck wird auf das Gefäß (10) über den zerstörbaren Verschluß (14) ein Deckel (18) abdicht-end aufgesetzt, über den ein Trägergasstrom zu- und abgeführt wird. Anschließend erfolgt das Erhit-zen der festen Substanz (12) wobei der Verschluß (14) zerstört und dann der gebildete Quecksilberdampf durch den Trägergasstrom über den amalgambildenden Körper (42) geleitet wird.

EP 0 402 696 A1

## Technisches Gebiet

Die Erfindung betrifft ein Verfahren zur Analyse von festen Substanzen auf Quecksilber durch Messung der Atomabsorption, mit den Verfahrensschritten

(a) Erhitzen der festen Substanz zum Austreiben des Quecksilbers,

(b) Transportieren des entstehenden Quecksilberdampfes mit einem Trägergasstrom über einen Körper großer Oberfläche aus einem amalgambildenden Material, so daß der Quecksilberdampf an der Oberfläche dieses Körpers als Amalgam gebunden und angereichert wird,

(c) anschließendes Erhitzen des Körpers zum Wiederfreisetzen des als Amalgam angereicherten Quecksilbers und

(d) Transportieren des so freigesetzten Quecksilberdampfes durch einen Trägergasstrom in eine Meßküvette eines Atomabsorptions-Photometers.

Die Erfindung betrifft auch eine Vorrichtung zur automatischen Durchführung eines solchen Verfahrens.

Üblicherweise werden feste Proben aufgeschlossen, also mit einer starken Säure gelöst. Bei der Analyse von Quecksilber wird diese Probenlösung mit einem Reagenz versetzt. Dadurch wird das Quecksilber als leicht flüchtiger Quecksilberdampf freigesetzt. Dieser Quecksilberdampf wird von einem Trägergasstrom in eine Meßküvette transportiert. In der Meßküvette wird aus der Atomabsorption die Quecksilberkonzentration bestimmt. Bei dem leicht flüchtigen Quecksilber besteht dabei aber die Gefahr, daß bei der Behandlung der Probensubstanz sich schon ein Teil des Quecksilbers verflüchtigt. Auch kann bei hochempfindlichen Messungen eine Verunreinigung durch die Atmosphäre oder die Reagenzien erfolgen. Das Verfahren, auf das sich die Erfindung bezieht, arbeitet daher mit der festen Probe. Das Quecksilber wird aus dieser festen Probe durch Erhitzen ausgetrieben. Das Austreiben des Quecksilbers aus der festen Probe erfolgt allerdings nicht reproduzierbar, da die jeweilige momentane Konzentration von Quecksilberdampf in der Meßküvette von der Art der Verbindungen abhängt, in denen das Quecksilber in der Probe abhängt. Aus diesem Grunde und um die Empfindlichkeit der Messung zu erhöhen, wird das Quecksilber zunächst als Amalgam angereichert. Aus dem Amalgam wird dann das Quecksilber kurzzeitig freigesetzt, so daß ein definierter Signalpeak erscheint, aus dem auf die Quecksilberkonzentration in der Probe geschlossen werden kann.

## Zugrundeliegender Stand der Technik

Durch die JP-Z-Eisei Kagaku 29(6), 418-22 ist es bekannt, zur Bestimmung von Quecksilber in organischen Proben das Quecksilber durch Erhitzen der Proben zu verdampfen. Der Quecksilberdampf wird durch eine Waschlösung geleitet und als Goldamalgam angereichert. Das Goldamalgam wird dann erhitzt und das Quecksilber freigesetzt. Der so erhaltene Quecksilberdampf wird optisch gemessen.

Ähnliche Verfahren zur Messung der Konzentration von Quecksilber in Gesteinen ist beschrieben in der GB-Z "Analyst" (London) 102 (1214), 399-403 und in "Analytica Chimica Acta" 78(2), 479-82.

Die DE-A 36 41 386 beschreibt ein Verfahren zur automatisierten Erzeugung gas- oder dampfförmiger Proben aus einer Flüssigkeit für die Atomabsorptions-Spektroskopie, bei welchem über die Flüssigkeit ein Schutzgas geleitet und dann der Flüssigkeit zur Bildung gas- oder dampfförmiger Probensubstanzen ein Reagenz zugesetzt wird. Die dann gebildeten Probensubstanzen werden mit dem Schutzgas einer Auffang- oder Meßeinrichtung zugeführt. Nach der Lehre der DE-A- 36 41 386 wird dabei nach der Reagenzzugabe das gesamte Schutzgas direkt in die Flüssigkeit eingeleitet. Es können auch nacheinander verschiedene Reagenzien in die Flüssigkeit eingeleitet werden. Dadurch soll eine schnellere und zuverlässigere vollautomatische Analyse ermöglicht werden, weil das durch die Flüssigkeit hindurchtretende Schutzgas eine Rührwirkung hat. Probengefäße werden nacheinander zu einer Arbeitsstation transportiert. Dort wird von einem Mechanismus ein Auslaßteil auf das oben offene Probengefäß aufgesetzt. Dieses Auslaßteil führt verschiedene in die Probenflüssigkeit eingeführte Rohre und enthält einen mit dem Raum oberhalb der Probenflüssigkeit in Verbindung stehenden Auslaß.

Die DE-A 27 48 685 beschreibt ebenfalls eine Vorrichtung zur Erzeugung einer gasförmigen Meßprobe aus einer Probenflüssigkeit und zum Überführen dieser Meßprobe in eine Meßküvette eines Atomabsorptions-Spektrometers mittels eines Schutzgases. Auch dort ist das Probengefäß auf einer schrittweise fortschaltbaren Transportvorrichtung angeordnet. Anschlüsse für Schutzgaseinlaß, Schutzgasauslaß und Reagenzdosierung sind in einem Verschlußteil vorgesehen, das vertikal beweglich und durch einen Stellmotor auf das Probengefäß aufsetzbar ist.

Die DE-A 27 37 727 beschreibt eine Vorrichtung zur Bestimmung von Elementen in gasförmigen, festen oder flüssigen Proben unter Ausnutzung der "Vorwärtsstreuung". Ein Meßlichtbündel mit der Resonanzwellenlänge eines gesuchten Elements ist durch eine Meßküvette geleitet. Vor der Meßküvette ist ein Polarisator angeordnet und hinter der Meßküvette sitzt ein Analysator, der gekreuzt zu dem Polarisator angeordnet ist. Auf die Meßküvette wirkt ein Magnetfeld, so daß Atome in der Meßküvette den Zeeman-Effekt zeigen. Die Meßküvette ist mit einem Ofen verbunden, der abgeschlossen ist und einen Tiegel mit der zu analysierenden Probe enthält. Über eine Saugvorrichtung wird Probendampf aus dem Ofen durch die Meßküvette hindurchgesaugt. Durch die Wechselwirkung mit den durch den Zeeman-Effekt erhaltenen Komponenten der Resonanzlinien erfolgt eine von der Konzentration des gesuchten Elements abhängige Drehung der Polarisationsebene, wodurch trotz der gekreuzten Anordnung von Polarisator und Analysator ein von der Konzentration des gesuchten Elements abhängiger Lichtstrom durch die Anordnung hindurchtritt und auf einen photoelektrischen Detektor fällt.

Die US-A-4 023 929 betrifft ein Verfahren zur Bestimmung des Quecksilbergehalts von Wasser. Das Wasser wird in einer Sammelvorrichtung gesammelt, bei 1000° Celsius verdampft und in einer Pyrolysezone bei Temperaturen zwischen 1000° und 1200° Celsius zersetzt. Dabei wird das Quecksilber in dem Wasser als Dampf ausgetrieben und von einem Trägergas über eine Metallfläche geleitet. Auf der Metallfläche wird das Quecksilber angereichert. Das angereicherte Quecksilber kann dann durch Aufheizen der adsorbierenden Metallfläche wieder ausgetrieben und gemessen werden.

Die US-A-4 758 519 beschreibt ein Verfahren zur kontinuierlichen Analyse von gasförmigem Quecksilber in ein Gas, welches eine Quecksilberverbindung enthält. Dabei wird das Gas vor der Messung mit einem Reduktionsmittel behandelt, um die Quecksilberverbindung in dem Gas zu metallischem Quecksilber zu reduzieren.

Ein Aufsatz von Mertens und Althaus "Bestimmung von Quecksilber mit Hilfe der Amalgamtechnik unter Verwendung von Hydroxylammoniumchlorid und Natriumborhydrid oder Zinn (II)-Chlorid" in "Fresenius Zeitschrift für analytische Chemie" (1983) 316: 696 - 698 beschreibt eine Vorrichtung zur Quecksilberbestimmung, bei welcher Reagenzien in ein Reaktionsgefäß eingeleitet werden. Der gebildete Quecksilberdampf wird von einem Stickstoffstrom durch eine Waschflasche und eine Trockenvorrichtung über ein Gold-Platin-Netz geleitet. Dort wird das Quecksilber als Amalgam gebunden und angereichert. Durch eine Heizung wird das Gold-Platin-Netz erhitzt und das angereicherte Quecksilber wieder ausgetrieben. Der so wieder erhaltene Quecksilberdampf wird von dem inerten Trägergas Stickstoff in die Meßküvette eines Atomabsorptions-Spektrometers geleitet.

Die DE-A-30 44 627 zeigt eine Vorrichtung zur Probeneingabe in ein Graphitrohr bei der flammenlosen Atomabsorptions-Spektroskopie. Eine Probe wird auf einen in das Graphitrohr einführbaren Probenträger aufgebracht. Der Probenträger ist tiegelförmig ausgebildet und wird durch eine Heizeinrichtung kontaktlos beheizt. Die Heizeinrichtung kann beispielsweise von einer Lampe gebildet sein, deren Strahlung von einem Hohlspiegel auf der Probe konzentriert wird. Hierdurch kann eine Trocknung und Veraschung der Probe außerhalb des Graphitrohres erfolgen.

Die DE-C-32 04 584 betrifft eine Vorrichtung zum Speichern einer Vielzahl von in einem automatischen, chemischen Analysengerät abzugebenden Flüssigkeiten. Ein bewegbarer Halter nimmt eine Mehrzahl von abschließbaren Flüssigkeitsgefäßen auf. Dieser Halter ist mit den Flüssigkeitsgefäßen in einer Kammer angeordnet. Die Flüssigkeitsgefäße werden einzeln durch den Halter in eine Absaugposition transportiert. Dabei ist für jedes der Flüssigkeitsgefäße ein eigener Verschluß vorgesehen. In der Absaugposition wird der Verschluß durch eine Verschlußbetätigungseinrichtung geöffnet. Ein Röhrchen zur Entnahme von Flüssigkeit wird dann durch eine Öffnung in der Kammer hindurch in das Flüssigkeitsgefäß eingeführt.

Die DE-C-29 54 181 betrifft einen Probengeber zum automatischen Eingeben von oben in einen mit einer Probeneingabeöffnung versehenen Ofen für die flammenlose Atomabsorptions - Spektroskopie. Probengefäße sind durch einen Drehtisch in Ansaugstellungen bewegbar. In den Ansaugstellungen wird ein Ansaugrohr in das Probengefäß eingeführt. Es wird Probe angesaugt und in die Probeneingabeöffnung des Ofens dosiert.

## Offenbarung der Erfindung.

Der Erfindung liegt die Aufgabe zugrunde, ein Verfahren und eine Vorrichtung der eingangs erwähnten Art so auszubilden, daß die Gefahr eines Verlustes an flüchtigem Quecksilber zwischen Probenahme und Analyse und während der Analyse vermindert wird.

Der Erfindung liegt weiter die Aufgabe zugrunde, ein Verfahren der eingangs genannten Art so auszubilden, daß es sich leicht automatisieren läßt.

Eine weitere Aufgabe der Erfindung ist es, eine automatische Vorrichtung für die Analyse von festen Substanzen auf Quecksilber zu schaffen.

Das erfindungsgemäße Verfahren sieht zu diesem Zweck vor, daß (e) die zu analysierende feste Substanz in ein Gefäß mit einem Verschluß eingeschlossen wird, der während des Erhitzens der festen Substanz zerstört wird.

Die zu analysierende Substanz wird somit unverändert in ein Gefäß eingebracht. Dieses Gefäß wird verschlossen. Das Gefäß bleibt verschlossen, bis das Gefäß in dem Analysengerät zum Austreiben des Quecksilbers erhitzt wird. Bei dieser Erhitzung wird erst der Verschluß zerstört. Das dann freigesetzte Quecksilber kann nicht mehr verloren gehen. Es wird als Amalgam angereichert und dann durch Atomabsorptionsmessung bestimmt.

Auf das Gefäß kann über den zerstörbaren Verschluß ein Deckel abdichtend aufgesetzt werden, über den ein Trägergasstrom zu- und abgeführt wird. Anschließend erfolgt das Erhitzen der festen Substanz, wobei der Verschluß zerstört und dann der gebildete Quecksilberdampf durch den Trägergasstrom über den amalgambildenden Körper geleitet wird. Das Erhitzen der festen Substanz erfolgt durch Strahlung, welche gebündelt auf die Substanz gerichtet wird.

Eine Automatisierung des Verfahrens läßt sich dadurch erreichen, daß die Proben fortlaufend automatisch zu einer Stelle transportiert werden, an welcher das Aufsetzen des Deckels und das Erhitzen erfolgt.

Das Gefäß kann nach dem Einbringen der zu untersuchenden Substanz mit einem Verschluß verschlossen werden, der beim Erhitzen unter dem Einfluß des im Gefäß sich ausbildenden Überdrucks aufreißt, oder mit einem Verschluß, der beim Erhitzen schmilzt.

Zur Durchführung des beschriebenen Verfahrens sind Gefäße zur Aufnahme von fester Probensubstanz vorgesehen, die durch Verschlüsse abschließbar sind, welche bei Erhitzung zerstört werden. Es ist eine Transporteinrichtung vorgesehen, in welche eine Mehrzahl solcher Gefäße einsetzbar sind und durch welche nacheinander jeweils eines dieser Gefäße in eine Arbeitsstellung bewegbar ist. Die Vorrichtung enthält weiterhin einen Deckel mit einem Trägergaseinlaß und einem Trägergasauslaß, wobei der Trägergaseinlaß mit einer Trägergasquelle verbindbar ist, sowie Mittel zum abdichtenden Aufsetzen des Deckels auf das jeweils in Arbeitsstellung befindliche Gefäß. Eine erste Heizeinrichtung dient zum Erhitzen des in der Arbeitsstellung befindlichen Gefäßes und der darin befindlichen Substanz nach Aufsetzen des Deckels. Zur Anreicherung des Quecksilbers dient ein Körper aus amalgambildenden Material mit großer Oberfläche in einem geschlossenen System, das einerseits mit dem Trägergasauslaß des Deckels und andererseits mit einer Meßküvette eines Atomabsorptions-Photometers verbunden ist. Eine zweite Heizeinrichtung dient zum Erhitzen des Körpers aus amalgambildenden Material, derart, daß als Amalgam angereichertes Quecksilber als Quecksilberdampf freigesetzt und von dem Trägergas zu der Meßküvette transportiert wird.

Die Transporteinrichtung kann ein Drehtisch sein.

Vorteilhaft ist es, wenn die erste Heizeinrichtung eine als Wärmestrahlungsquelle dienende Lampe ist, deren Strahlung durch einen Reflektor am Ort des in der Arbeitsstellung befindlichen Gefäßes gesammelt wird.

Ein Ausführungsbeispiel der Erfindung ist nachstehend unter Bezugnahme auf die zugehörige Zeichnung näher erläutert.

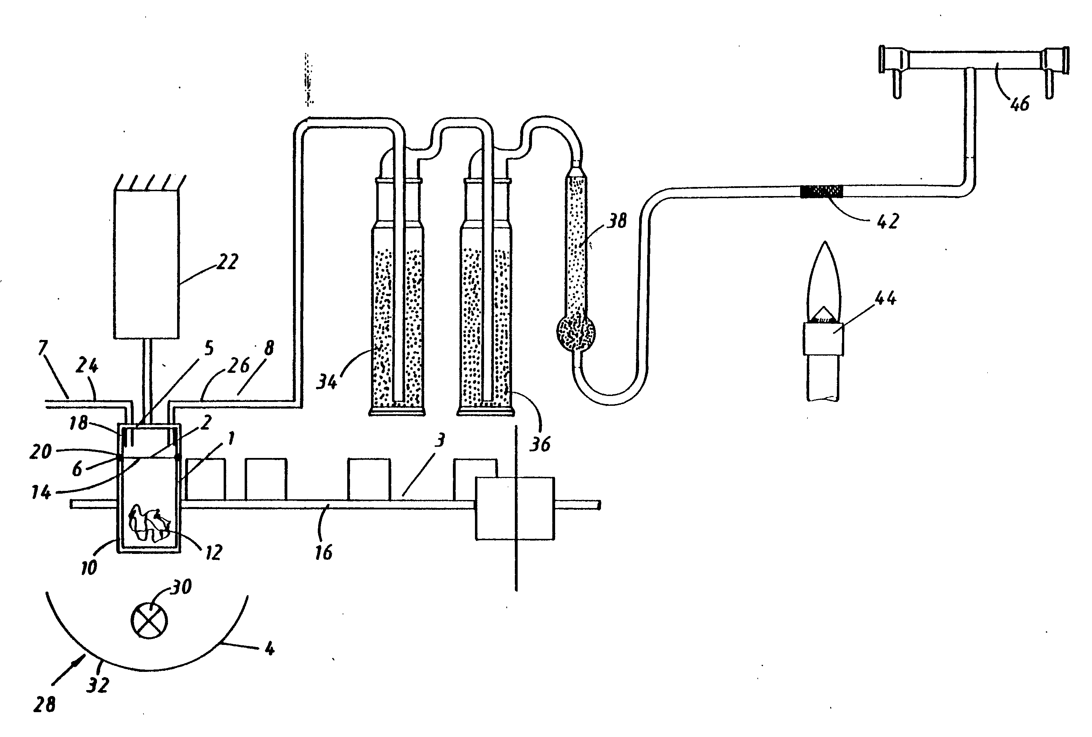

## Kurze Beschreibung der Zeichnung.

Die Zeichnung ist eine schematische Darstellung und zeigt einen Drehtisch als Transportvorrichtung zur Zufuhr von Gefäßen zu einer Arbeitsstellung, einen auf die Gefäße aufsetzbaren Deckel, eine Heizeinrichtung zum Beheizen der Gefäße zum Austreiben von Quecksilber, eine Einrichtung zur Anreicherung des Quecksilbers, eine Heizeinrichtung zum Wiederfreisetzen des Quecksilbers und eine Meßküvette.

## Bevorzugte Ausführung der Erfindung

Mit 10 ist ein Gefäß bezeichnet, das eine auf Quecksilber zu analysierende feste Substanz 12 enthält. Das Gefäß 10 ist durch einen Verschluß 14 abgeschlossen. Der Verschluß 14 wird schon unmittelbar nach der Probenahme angebracht. Es ist so sichergestellt, daß sich aus der Substanz kein Quecksilber vor der Analyse oder während einer Probenaufbereitung verflüchtigen kann. Eine Mehrzahl solcher Gefäße 10 ist in einer Transportvorrichtung 16 in Form eines Drehtisches angeordnet. Durch die Transportvorrichtung 16 werden die Gefäße 10 nacheinander in eine Arbeitsstellung gebracht, die in der Figur ganz links dargestellt ist.

In dieser Arbeitsstellung ist ein Deckel 18 abdichtend auf das Gefäß 10 aufsetzbar. Der Deckel wird dabei noch über den Verschluß 14 gesetzt. Der Verschluß 14 ist eine relativ dünne Membran, die über den Rand des Gefäßes 10 gespannt ist. Der Deckel 18 wird mit einer Dichtung 20 auf den Rand des Gefäßes 10 gesetzt. Das wird mittels einer Hubvorrichtung 22 bewerkstelligt, die hier als Pneumatikzylinder dargestellt ist. Der Deckel enthält einen Trägergaseinlaß 24 und einen Trägergasauslaß 26. Der Trägergaseinlaß 24 wird im Betrieb mit einer Trägergasquelle verbunden.

Das Gefäß 10 in der Arbeitsstellung kann von einer ersten Heizeinrichtung 28 beheizt werden. Die Heizeinrichtung 28 enthält eine Lampe 30 als Wärmestrahlungsquelle und einen Reflektor 32. Durch den Reflektor wird die Wärmestrahlung auf dem Gefäß 10 gesammelt. Die Substanz 12 in dem Gefäß 10 wird dadurch auf eine so hohe Temperatur erhitzt, daß das Quecksilber aus der Substanz ausgetrieben wird und als Quecksilberdampf erscheint.

Durch die Druckerhöhung in dem Gefäß 10, die infolge der Erhitzung eintritt, reißt der Verschluß 14 auf. Der Verschluß 14 kann auch aus einem Material bestehen, das bei der Erhitzung der Substanz 12 und des Gefäßes 10 schmilzt. In der Praxis werden beide Einflüsse wirksam werden. Es wird jedenfalls ene Verbindung zwischen dem Inneren des Gehäuses 10 und dem Innenraum des Deckels hergestellt. Der über den Trägergaseinlaß 24 zugeführte Trägergasstrom transportiert den aus der Substanz entwickelten Quecksilberdampf über den Trägergasauslaß 26 ab.

Der Trägergas- und Quecksilberdampfstrom tritt durch eine Waschflasche 34 mit NaOH und eine Waschflasche 36 mit Wasser sowie anschließend durch ein Trockenrohr 38. Der so gereinigte und getrocknete Gasstrom fließt über ein in einem Rohr 40 angeordnetes Goldnetz 42. Das Gold ist ein amalgambildendes Material. Das Netz bildet einen Körper mit großer Oberfläche. Der Quecksilberdampf bildet mit dem Gold ein Amalgam und wird so an dem Goldnetz 42 angereichert. Die Menge des insgesamt angereicherten Quecksilbers entspricht dann der Menge des Quecksilbers in der in dem Gefäß 10 eingeschlossenen Substanz 12, und zwar unabhängig davon, wie schnell das Quecksilber aus der Substanz freigesetzt wird.

Nachdem das gesamte Quecksilber als Amalgam an dem Goldnetz 42 angelagert ist, wird das Rohr 40 und das Goldnetz 42 durch eine zweite Heizeinrichtung 44, die hier als Flamme dargestellt ist, erhitzt. Dabei zersetzt sich das Amalgam, und das Quecksilber wird wieder als Quecksilberdampf freigesetzt. Das geschieht jetzt in reproduzierbarer Weise unabhängig von der Art der Substanz 12. Der Queck silberdampf wird von dem Trägergasstrom in eine Meßküvette 46 transportiert und durch Atomabsorptions-Spektralphotometrie bestimmt.

Nach Durchführung einer Analyse wird der Deckel 18 durch die Hubvorrichtung 22 von dem Gefäß 10 abgehoben. Der Drehtisch wird um einen Schritt weiterbewegt, so daß das nächste, noch geschlossene Gefäß 10 in die Arbeitsstellung bewegt wird. Dann wird der beschriebene Vorggang wiederholt.

Die beschriebene Anordnung hat den Vorteil, daß die Probe im Urzustand, ohne weitere Behandlung bis in das Analysengerät gebracht wird.Die Probe ist bis zu diesem Zeitpunkt in dem Gefäß eingeschlossen, so daß kein Quecksilber sich verflüchtigen kann, und die Probe auch keinen Umwelteinflüssen ausgesetzt ist. Die zu analysierende Substanz kann schon am Ort der Probenahme, der entfernt vom Ort der Analyse ist, in das Gefäß 10 eingefüllt werden. Die Analysen lassen sich in der beschriebenen Weise automatisieren.

## Ansprüche

1. Verfahren zur Analyse von festen Substanzen auf Quecksilber durch Messung der Atomabsorption, mit den Verfahrensschritten

(a) Erhitzen der festen Substanz zum Austreiben des Quecksilbers,

(b) Transportieren des entstehenden Quecksilberdampfes mit einem Trägergasstrom über einen Körper (42) großer Oberfläche aus einem amalgambildenden Material, so daß der Quecksilberdampf an der Oberfläche dieses Körpers (42) als Amalgam gebunden und angereichert wird,

(c) anschließendes Erhitzen des Körpers zum Wiederfreisetzen des als Amalgam angereicherten Quecksilbers und

(d) Transportieren des so freigesetzten Quecksilberdampfes durch einen Trägergasstrom in eine Meßküvette (46) eines Atomabsorptions-Photometers,

**dadurch gekennzeichnet, daß**

(e) die zu analysierende feste Substanz (12) in ein Gefäß (10) mit einem Verschluß (14) eingeschlossen wird, der während des Erhitzens der festen Substanz (12) zerstört wird.

2. Verfahren nach Anspruch 1, **dadurch gekennzeichnet, daß**

(a) auf das Gefäß (10) über den zerstörbaren Verschluß (14) ein Deckel (18) abdichtend aufgesetzt wird, über den ein Trägergasstrom zu- und abgeführt wird,

(b) anschließend das Erhitzen der festen Substanz (12) erfolgt, wobei der Verschluß (14) zerstört und dann der gebildete Quecksilberdampf durch den Trägergasstrom über den amalgambildenden Körper (42) geleitet wird.

3. Verfahren nach Anspruch 1 oder 2, **dadurch gekennzeichnet, daß** das Erhitzen der festen Substanz (12) durch Strahlung erfolgt, welche gebündelt auf die Substanz (12) gerichtet wird.

4. Verfahren nach Anspruch 2, **dadurch gekennzeichnet, daß** die Gefäße (10) fortlaufend automatisch zu einer Stelle transportiert werden, an welcher das Aufsetzen des Deckels (18) und das Erhitzen erfolgt.

5. Verfahren nach einem der Ansprüche 1 bis 4, **dadurch gekennzeichnet, daß** das Gefäß (10) nach dem Einbringen der zu untersuchenden Substanz (12) mit einem Verschluß verschlossen wird, der beim Erhitzen unter dem Einfluß des im Gefäß (10) sich ausbildenden Überdrucks aufreißt.

6. Verfahren nach einem der Ansprüche 1 bis 4, dadurch gekennzeichnet, daß das Gefäß (10) nach dem Einbringen der zu untersuchenden Substanz (12) mit einem Verschluß (14) verschlossen wird, der beim Erhitzen schmilzt.

.7. Vorrichtung zur Durchführung des Verfahrens nach Anspruch 4, **gekennzeichnet durch**

(a) Gefäße (10) zur Aufnahme von fester Probensubstanz, die durch Verschlüsse (14) abschließbar sind, welche bei Erhitzung zerstört werden,

(b) eine Transporteinrichtung (16), in welche eine Mehrzahl solcher Gefäße (10) einsetzbar sind und durch welche nacheinander jeweils eines dieser Gefäße (10) in eine Arbeitsstellung bewegbar ist,

(c) einen Deckel (18) mit einem Trägergaseinlaß (24) und einem Trägergasauslaß (26) wobei der Trägergaseinlaß (24) mit einer Trägergasquelle verbindbar ist,

(d) Mittel (22) zum abdichtenden Aufsetzen des Deckels (18) auf das jeweils in Arbeitsstellung befindliche Gefäß (10,

(e) eine erste Heizeinrichtung (28) zum Erhitzen des in der Arbeitsstellung befindlichen Gefäßes (10) und der darin befindlichen Substanz nach Aufsetzen des Deckels (18),

(f) einen Körper (42) aus amalgambildenden Material mit großer Oberfläche in einem geschlossenen System, das einerseits mit dem Trägergasauslaß (26) des Deckels (18) und andererseits mit einer Meßküvette (46) eines Atomabsorptions-Photometers verbunden ist, und

(g) eine zweite Heizeinrichtung (44) zum Erhitzen des Körpers (42) aus amalgambildenden Material, derart, daß als Amalgam angereichertes Quecksilber als Quecksilberdampf freigesetzt und von dem Trägergas zu der Meßküvette (44) transportiert wird.

8. Vorrichtung nach Anspruch 7, **dadurch gekennzeichnet, daß** die Verschlüsse (14) der Gefäße (10) von Membranen gebildet sind, welche unter dem Einfluß des sich in dem Gefäß bei der Erhitzung aufbauenden Überdruckes aufreißen.

9. Vorrichtung nach Anspruch 7, **dadurch gekennzeichnet, daß** die Verschlüsse (14) der Gefäße (10) aus einem Material bestehen, das bei der Erhitzung schmilzt.

10. Vorrichtung nach einem der Ansprüche 7 bis 9, **dadurch gekennzeichnet, daß** die Transporteinrichtung (16) ein Drehtisch ist.

11. Vorrichtung nach einem der Ansprüche 7 bis 10, **dadurch gekennzeichnet, daß** die erste Heizeinrichtung (28) eine als Wärmestrahlungsquelle dienende Lampe (30) aufweist, deren Strahlung durch einen Reflektor (32) am Ort des in der Arbeitsstellung befindlichen Gefäßes (10) gesammelt wird.

EP 0 402 696 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | ANALYST<br>Band 102, Mai 1977, Seiten 399-403:<br>R.A. NICHOLSON: "Rapid Thermal-decomposition Technique for the Atomic-absorption Determination of Mercury in Rocks, Soils and Sediments"<br>* ganzes Dokument *<br>--- | 1,7 | G 01 N 21/31<br>G 01 N 21/74 |
| A,D | EISEI KAGAKU<br>Band 29, Nr. 6, 1983, Seiten 418-422;<br>J. YAMAMOTO et al.: "Nanogram-Level Determination of Total Mercury in Biological Samples by Furnace Combustion, Gold Amalgamation and Gas Phase Detection" * ganzes Dokument *<br>--- | 1,7 | |
| A,D | FRESENIUS ZEITSCHRIFT FUER ANALYTISCHE CHEMIE<br>Band 316, 1983, Seiten 696-698; H. MERTENS et al.: "Bestimmung von Quecksilber mit Hilfe der Amalgamtechnik unter Verwendung von Hydroxylammoniumchlorid und Natriumborhydrid oder Zinn(II)-chlorid"<br>* Figur 1 *<br>--- | 1,7 | |
| A | US-A-4 455 280  (T. SHINOHARA et al.)<br>* Anspruch 1 *; & DE-C-3204584 (Kat. P,D)<br>--- | 7 | RECHERCHIERTE SACHGEBIETE (Int. Cl.5)<br><br>G 01 N<br>B 01 L |
| A,D | DE-A-3 044 627  (BODENSEEWERK PERKIN-ELMER & CO. GMBH)<br>* Anspruch 1 *<br>--- | 7 | |
| A,P | EP-A-0 358 206  (BODENSEEWERK PERKIN-ELMER GMBH)<br>* ganzes Dokument *<br>---            -/- | 1,7 | |

Der vorliegende Recherchenbericht wurde für alle Patentansprüche erstellt

| Recherchenort | Abschlußdatum der Recherche | Prüfer |
|---|---|---|
| BERLIN | 21-09-1990 | BRISON O.P. |

EPO FORM 1503 03.82 (P0403)

Nummer der Anmeldung

EP  90 11 0180

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | DE-C-2 954 181 (BODENSEEWERK PERKIN-ELMER & CO. GMBH) * ganzes Dokument * | 7 | |
| | --- | | |
| A,D | DE-A-2 748 685 (BODENSEEWERK PERKIN-ELMER & CO. GMBH) * ganzes Dokument * | 7 | |
| | ----- | | |

RECHERCHIERTE
SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| BERLIN | 21-09-1990 | BRISON O.P. |